# EUROPEAN PATENT APPLICATION

(11) **EP 4 679 792 A1**
(43) Date of publication of application: **14.01.2026**
(21) Application number: 25188405.2
(22) Date of filing: 09.07.2025
(51) Int. Cl.: H04L 43/028, H04L 41/14, H04L 43/12, H04L 9/40, H04M 3/22, H04L 43/20

(54) **NETWORK PACKET MIRRORING FOR COMMUNICATIONS NETWORK ANALYSIS**

(30) Priority: 12.07.2024 US 202418772056
(71) Applicant: Microsoft Technology Licensing, LLC, Redmond, WA 98052 (US)
(72) Inventor: KALIA, Anuj, Redmond, Washington 98052 (US)
(74) Representative: CMS Cameron McKenna Nabarro Olswang LLP

(57) **Abstract**

The techniques disclosed herein provide a system for mirroring network traffic by way of network packet duplication using a network interface card in a communications environment. More specifically the present techniques are directed to retrieving data that is transmitted over a communications network (e.g., network packets) in a cloud radio access network (C-RAN) environment, also referred to as packet capture. For instance, the proposed system can mirror network traffic between a radio unit (RU) and a virtual radio access network (vRAN) within a distributed unit (DU) server of a telecommunications network (e.g., a 5G network). As such, the disclosed techniques exploit preexisting hardware and software features present in many network interface cards. In this way, the present techniques enable granular packet capture without requiring additional specialized hardware and/or software. Moreover, the network interface card can be configured to loopback scheduling information to streamline packet analysis operations.

## Description

### BACKGROUND

With the advent of advanced communications network technologies such as fifth-generation cellular networks (5G) and beyond, network operators (e.g., telecommunications providers) have implemented complex, large-scale infrastructure to support such technologies. For instance, many operators utilize a cloud radio access network (C-RAN) approach for a centralized, cloud-computing based architecture for radio access networks in which a centralized unit (CU) interfaces and manages a plurality of radio units (RUs) via distributed unit (DU) servers. This is in contrast to the standalone base stations of traditional cellular networks in which an individual base station covered a small area processing and transmitting its own signal.

While a cloud radio access network architecture enables the benefits of advanced network technologies, such a paradigm likewise presents certain technical challenges as well. For example, a network operator may wish to gain visibility into the behavior of the communications network for implementing new features, resolving technical issues (e.g., debugging), and so forth. In various examples, this can be accomplished by retrieving data that is transmitted over the communications network (e.g., network packets), often referred to as packet mirroring and/or packet capture. Unfortunately, the unique nature of cloud radio access network architectures can render conventional packet capture techniques infeasible.

It is with respect to these and other considerations that the disclosure made herein is presented.

### SUMMARY

The techniques disclosed herein provide a system for retrieving data that is transmitted over a communications network (e.g., network packets) in a cloud radio access network (C-RAN) environment, also referred to as packet mirroring or packet capture. More specifically, the present techniques are directed to mirroring network traffic between a radio unit (RU) and a physical layer of a virtual radio access network (vRAN) within a distributed unit (DU) server of a telecommunications network. The radio unit and distributed unit server can be collectively referred to as a radio access network (RAN) site representing a figurative "cell" site in a communications network, hence the term "cellular network". As mentioned above, retrieving such data provides visibility into the behavior of the communications network that is useful when implementing new features, resolving technical issues, and so forth. In a conventional approach, a top-of-rack (ToR) switch is configured with a port mirroring rule to duplicate incoming network packets to a capture server. That is, network traffic that traverses a first port is duplicated to a second port. Subsequently, standard packet capture tools can then be applied to the network packets at the capture server.

Unfortunately, such an approach requires a separate dedicated server to serve as the capture server which is oftentimes infeasible in practice. For example, a radio access network site may comprise a distributed unit server and one or more radio units without supplemental or intervening network components. As such, there may not be any separate servers available for implementing the capture server and no top-of-rack switch for implementing the port mirroring rule. Moreover, due to ever-increasing network speeds, many distributed unit servers receive network packets by way of a kernel bypass rather than a conventional networking protocol stack. Consequently, existing packet analysis tools such as tcpdump cannot be utilized within a cloud radio access network context.

In contrast, the present techniques utilize a packet duplication function (e.g., a mirroring rule, a virtual function) within a network interface card (NIC) to mirror incoming network traffic. For instance, an incoming network packet can be received by the network interface card from a radio unit in which the network packet is directed to a virtual radio access network. Accordingly, the network interface card can generate a duplicate network packet for storage in a network analysis component (e.g., a packet capture application) while routing the received network packet to its destination. In various examples, the packet duplication function defines a condition for duplicating an incoming network packet such as a source medium access control (MAC) address identifying a radio unit.

In an example of the technical benefit of the present disclosure, the disclosed techniques exploit the preexisting hardware within many distributed unit servers such as embedded switches (eSwitches) within network interface cards. While embedded switches are typically utilized for implementing network virtualization features (e.g., abstracting network resources in multi-tenant environments), the specialized nature of distributed unit servers precludes the need for such virtualization features. That is, the network interface card typically serves a single operational context (e.g., one or more radio units) and thus the onboard embedded switch is often available. Moreover, the techniques can be implemented on advanced network interface cards (e.g., smart NICs) as well as conventional network interface cards (e.g., dumb NICs). Consequently, in contrast to conventional packet capture techniques, the techniques described herein do not require additional specialized network hardware thereby enabling support for a broad range of distributed unit server hardware configurations.

Furthermore, by exploiting preexisting hardware, the present techniques enable consistent implementation of packet duplication functions irrespective of the manufacturer of the network interface card. In a conventional approach, a top-of-rack switch may require manufacturer-specific workflows to implement a port mirroring rule leading to significant complexity in large communications networks. In contrast, an embedded switch can be programmed using a standard application programming interface (API) irrespective of hardware manufacturer thereby streamlining programming operations.

In another example of the technical benefit of the present disclosure, implementing a packet duplication function using the embedded switch of a network interface card enables increased granularity when mirroring incoming network traffic. For example, the condition for duplicating an incoming network packet defined by the packet duplication function can be a medium access control address of a specific radio unit. Accordingly, the network interface card can generate duplicate packets on an individual radio unit basis rather than mirroring incoming network traffic indiscriminately.

In still another example of the technical benefit of the present disclosure, the network analysis component can establish an interface with the virtual radio access network to receive scheduling information with respect to incoming network packets to streamline analysis operations. In a specific example, the incoming network packets are In-phase and Quadrature (IQ) sample packets representing an energy level in various portions of a frequency spectrum (e.g., subcarriers). An individual network packet comprises a series of 3300 complex numbers quantifying the energy level in each subcarrier. In practice however, not all of the 3300 subcarriers may be active at a given time. As such, expending the time and computing resources to analyze all 3300 complex numbers can be inefficient. Accordingly, the scheduling information can define which subcarriers of a given network packet are active (e.g., subcarriers 1-122 are active, 121-3300 are inactive).

By retrieving scheduling information from the virtual radio access network, the network analysis component can determine which portions of a network packet to analyze (e.g., active subcarriers) while forgoing irrelevant portions of the network packet (e.g., inactive subcarriers). In this way, the network analysis component reduces the time and computing resources that are expended when analyzing network packets. Moreover, the scheduling information can be provided to the network analysis component via a loopback function of the network interface card to continue exploiting preexisting hardware and/or software infrastructure and further improving efficiency and reducing latency.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 is a block diagram of a system for mirroring a network packet from a radio unit using an embedded switch of a network interface card for use in a network analysis component.
FIG. 2 is a block diagram of a system for mirroring a network packet from one or more radio units using an embedded switch of a network interface card for use in a network analysis component in which network packets can be selectively mirrored based on a source radio unit.
FIG. 3 illustrates an example loopback system for providing scheduling information from a virtual radio access network to a network analysis component exploiting standard hardware and/or software features of a network interface card.
FIG. 4 illustrates an example loopback system for providing scheduling information from a virtual radio access network to a network analysis component utilizing advanced hardware and/or software features of a smart network interface card.
FIG. 5 is a flow diagram showing aspects of a process for mirroring incoming network traffic by duplicating network packets for analyzing a communications network.
FIG. 6 is a computer architecture diagram illustrating an illustrative computer hardware and software architecture for a computing system capable of implementing aspects of the techniques and technologies presented herein.
FIG. 7 is a computer architecture diagram illustrating an illustrative computer hardware and software architecture for a computing system capable of implementing aspects of the techniques and technologies presented herein.

### DETAILED DESCRIPTION

The techniques disclosed herein provide a system for mirroring network traffic by way of network packet duplication in a communications environment. More specifically, as mentioned above, the present techniques are directed to retrieving data that is transmitted over a communications network (e.g., network packets) in a cloud radio access network (C-RAN) environment, also referred to as packet mirroring or packet capture. For instance, the proposed system can be utilized to mirror network traffic between a radio unit (RU) and a physical layer of a virtual radio access network (vRAN) within a distributed unit (DU) server of a telecommunications network.

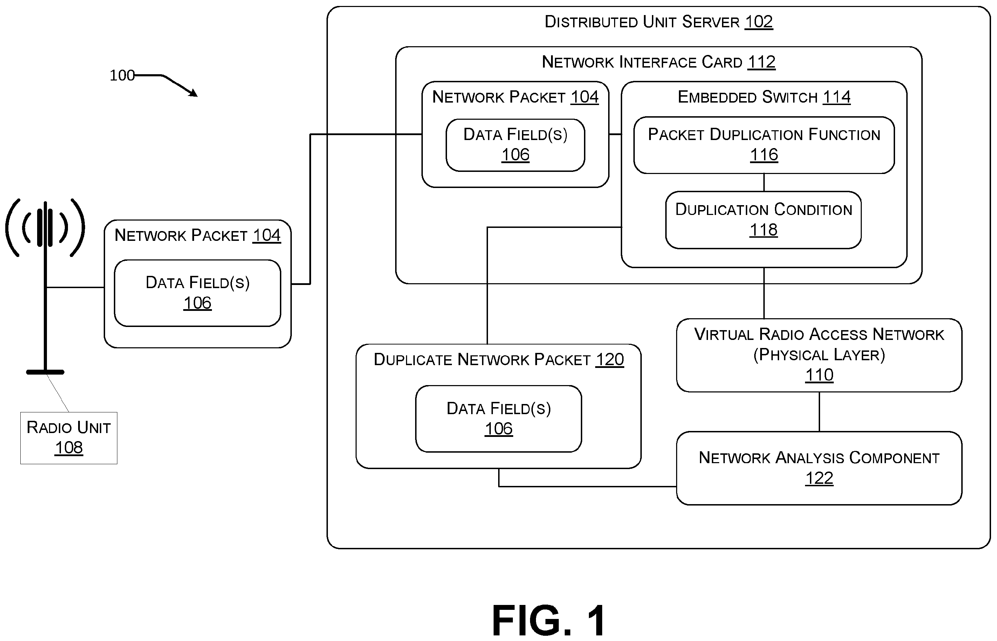

FIG. 1 illustrates a radio access network site 100 in which a distributed unit server 102 is configured to receive a network packet 104 comprising a plurality of data fields 106 from a radio unit 108 wherein the network packet 104 is directed to a virtual radio access network 110. In a specific example, the network packet 104 is an In-phase and Quadrature (IQ) sample packet recording an energy level in various portions (e.g., subcarriers) of a frequency spectrum. For instance, the network packet can comprise a set of 3300 complex numbers quantifying the energy level in each of 3300 subcarriers. Accordingly, the network packet 104 is received by a network interface card 112 (NIC). Generally described, a network interface card is a computer hardware component that connects a computer (e.g., the distributed unit server 102) to a computer network (e.g., the radio unit 108 and the virtual radio access network 110).

As shown, the network interface card 112 interfaces with the virtual radio access network 110 via the physical layer (e.g., an ethernet connection) through which the distributed unit server 102 can communicate with a centralized unit (CU) which is not illustrated in FIG. 1. Generally described, the distributed unit server 102 is a processing unit of a communications network (e.g., a 5G network) that resides between the radio unit 108 and the centralized unit and is configured to implement the lower layers of a network protocol stack such as some aspects of the physical layer (e.g., ethernet), the medium access control (MAC) standard, the radio link control (RLC) protocol, and so forth. Conversely, the centralized unit is a centralized computing infrastructure (e.g., a datacenter) that is configured to implement the upper layers of the protocol stack such as the packet data convergence protocol (PDCP), the radio resource control (RRC) protocol, the service data adaptation protocol (SDAP) and so forth.

As such, one centralized unit can interface with many distributed unit servers to connect the figurative "edges" of the communications network. Collectively, the interface between the radio unit 108, the distributed unit server 102, and the virtual radio access network 110 to the centralized unit is referred to as the fronthaul network. This is in contrast to the backhaul network in which the data from the fronthaul network is decoded and transmitted to the core network (e.g., the 5G core network). Consequently, a network operator may wish to gain visibility into the activity of the fronthaul network by capturing the network packet 104 from the radio unit 108.

Accordingly, the network interface card 112 processes the network packet 104 using an embedded switch 114 (eSwitch). As mentioned above, the embedded switch 114 implements a packet duplication function 116 defining a duplication condition 118 for generating a duplicate network packet 120. As shown, the duplicate network packet 120 contains the same data fields 106 as the original network packet 104 received from the radio unit 108. That is, the duplicate network packet 120 is functionally identical to the network packet 104.

In various examples, the packet duplication function 116 can be implemented in any suitable manner based on a user preference, operational condition, or other factor. In one example, the packet duplication function 116 is implemented by programming a mirroring rule via a standard application programming interface in which the duplication condition 118 is network traffic directed to the physical layer of the virtual radio access network 110. In another example, the packet duplication function 116 is implemented as a virtual function in which the duplication condition 118 is a source medium access control address (e.g., the address of the radio unit).

As will be elaborated upon below, the packet duplication function 116 and the duplication condition 118 enable selective generation of duplicate network packets 120 leading to improved efficiency and reduced latency. The duplicate network packet 120 is then provided to a network analysis component 122 while the original network packet 104 is transmitted to the virtual radio access network 110. In a specific example, the embedded switch 114 implements a first virtual function that routes the network packet 104 to the virtual radio access network in which the first virtual function is assigned a medium access control address of the radio unit 108. Consequently, the packet duplication function 116 is implemented as a second virtual function that is assigned the same medium access control address of the radio unit 108 to mirror the incoming network packet 104 to the network analysis component 120. In various examples, the network analysis component 122 is a packet capture application serving as a repository for storing network packets 104 on which various analysis tools can be applied such as tcpdump.

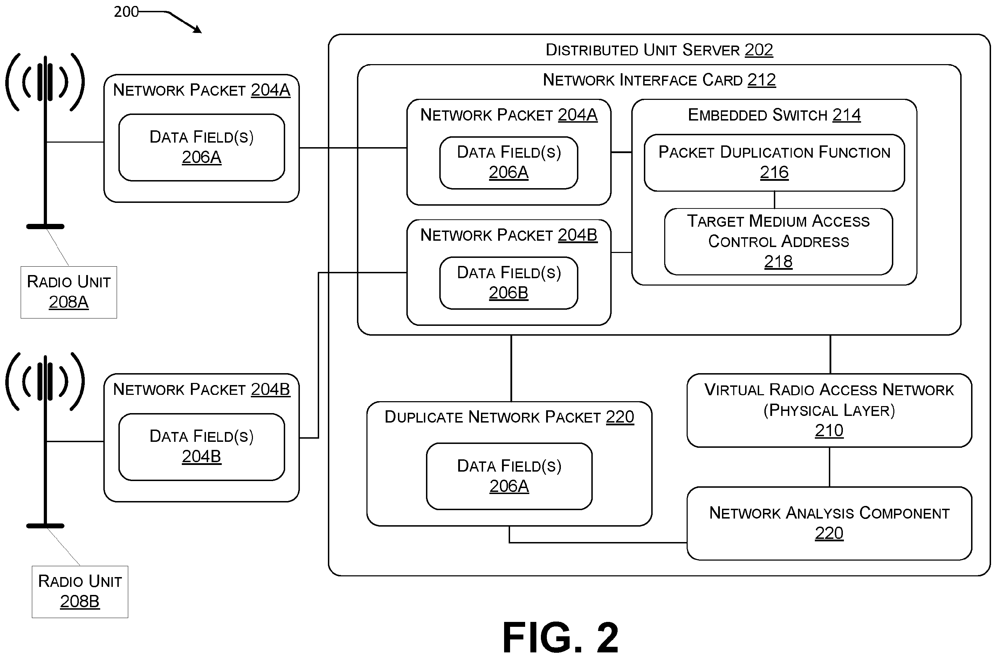

Turning now to FIG. 2, aspects of another example radio access network site 200 are shown and described. In contrast to the radio access network site 100 discussed above with respect to FIG. 1, the radio access network site 200 comprises a distributed unit server 202 which is configured to receive network packets 204A and 204B containing data fields 206A and 206B from multiple radio units 208A and 208B respectively wherein the network packets 204A and 204B are directed to a physical layer of a virtual radio access network 210. Similar to the above example, the network packets 204A and 204B are received at the distributed unit server 202 by the network interface card 212 and processed by the onboard embedded switch 214. Moreover, the embedded switch 214 is configured with a packet duplication function 216 (e.g., a virtual function, a mirroring rule) similar to the above example.

As shown in FIG. 2, the packet duplication function 216 defines a target medium access control address 218 as a duplication condition. In various examples, the target medium access control address 218 identifies a specific radio unit 208A out of the plurality of radio units 208A and 208B served by the distributed unit sever 202. Generally described, the medium access control standard controls hardware that is responsible for interaction with a wired and/or wireless transmission medium such as the connection between an individual radio unit 208A and the distributed unit server 202, connections to other radio units 208B, and the like. Accordingly, the network packet 204A originating from the radio unit 208A having the target medium access control address 218 are duplicated by the network interface card 212 via the embedded switch 214 to generate a duplicate network packet 220 comprising the same data fields 206A. Conversely, the network packet 204B originating from the radio unit 208B that does not match the target medium access control address 218 is not duplicated.

Accordingly, while the network interface card 212 transmits both the network packets 204A and 204B to the virtual radio access network 210, the embedded switch 214 only generates a duplicate network packet 220 for the network packet 204A which is then provided to the network analysis component 220. By enabling selective packet duplication, the embedded switch 214 enhances the efficiency of the network analysis component 220 by reducing the volume of input data. For instance, a conventional port mirroring approach would have indiscriminately duplicated the incoming network packets 204A and 204B irrespective of whether doing so would have been necessary. As modern communication networks continue to grow in size and speed, the volume of incoming data grows commensurately. As such, limiting the volume of incoming data by selective duplication via the packet duplication function 216 streamlines subsequent analysis efforts.

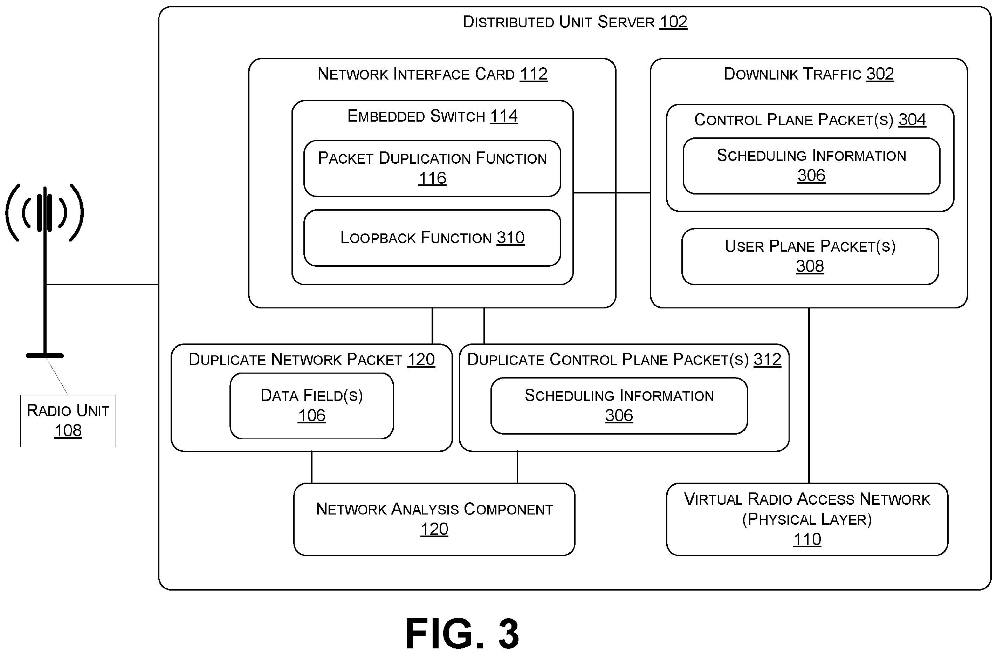

Proceeding now to FIG. 3, additional aspects of a distributed unit server 102 are shown and described. As briefly described above, the distributed unit server 102 can establish an interface between the virtual radio access network 110 and the network analysis component 122 to mirror downlink traffic 302 containing control plane packets 304 to further streamline packet analysis operations. Generally described, downlink traffic 302 is network traffic that is transmitted from a network provider to the broader communications network (e.g., the radio units described above). That is, the downlink traffic 302 is directed in the opposite direction of the network packets 104 and 204 discussed above which are received from the broader communications network via the radio unit 108.

Furthermore, the control plane packets 304 contain scheduling information 306 defining the allocation of radio resources to various devices within the communications network (e.g., cell phones, smart home sensors, personal vehicles). For instance, the context of In-phase and Quadrature sample packets, the scheduling information 306 defines which of the aforementioned 3300 subcarriers is active. As shown in FIG. 3, the downlink traffic 302 includes the control plane packets 304 containing the scheduling information 306 as well as user plane packets 308. In general, the scheduling information 306 of the control plane packets 304 contains the data defining the allocation of radio resources (e.g., active subcarriers) while the user plane packets 308 contain content being transmitted over the communications network (e.g., user data) such as image data, audio data, text data, and so forth.

Accordingly, the embedded switch 114 at the network interface card 112 can include a loopback function 310 for mirroring the downlink traffic 302 while accordingly transmitting the downlink traffic 302 to the radio unit 108. Similar to the packet duplication function 116, the loopback function 310 can be implemented in various ways such as a virtual function, a mirroring rule, and the like. In the present example, the network interface card 112 is a standard network interface card 112, which is often colloquially referred to as a "dumb" network interface card 112 in that the network interface card 112 does not implement certain advanced functionality such as packet header inspection features.

As such, the loopback function 310 first loops back all of the downlink traffic 302 including the control plane packets 304 containing the scheduling information 306 and the user plane packets 308. That is, the loopback function 310 causes the network interface card 112 to retain the downlink traffic 302 for additional processing. The loopback function 310 then sorts through the downlink traffic 302 to extract the control plane packets 304 containing the scheduling information 306. Subsequently, the loopback function 310 generates a duplicate control plane packets 312 containing the same scheduling information 306.

Accordingly, the duplicate scheduling information 312 is provided to the network analysis component 120 in addition to the duplicate network packet 120. As mentioned above, within the context of In-phase and Quadrature sample packets, while the data fields 106 record the state of all 3300 subcarriers, not all 3300 subcarriers may be active (e.g., allocated) at a given moment. As such, the scheduling information 306 informs the network analysis component 120 as to which of the 3300 subcarriers are currently active. Consequently, the network analysis component 120 can extract only the data fields 106 that correspond to active subcarriers. In a specific example, an individual control plane packet 304 comprises a transmission time interval

(TTI) corresponding to the duplicate network packet 120 indicating that subcarriers "1-120" are active. In response, the network analysis component 120 can selectively extract the specific data fields 106 corresponding to the active subcarriers "1-120" while forgoing the data fields 106 corresponding to the inactive subcarriers "121-3300".

In this way, mirroring the control plane packets 304 further enables the network analysis component 120 to reduce the volume of input data leading to further improvements to efficiency and reductions in latency. However, in some situations it may be desirable to analyze all of the data fields 106 of the duplicate network packet 120. For instance, when diagnosing an issue, a network operator may wish to analyze all 3300 data fields for thoroughness. As such, the network analysis component 120 can be configured to optionally utilize the scheduling information 306 based on the present technical context and/or requirements.

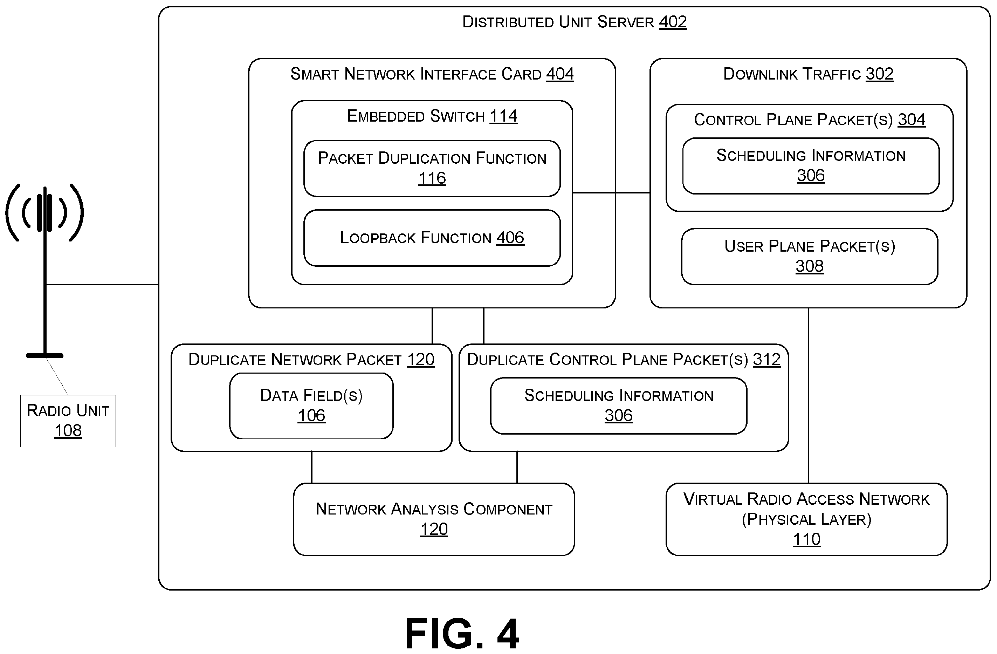

Turning now to FIG. 4, an alternative example of a distributed unit server 402 utilizing a smart network interface card 404 is shown and described. In contrast to the network interface card 112 discussed above, the smart network interface card 404 supports advanced functionality such as network packet header inspection. As such, the smart network interface card 404 can be configured to inspect the incoming downlink traffic 302 to distinguish between the control plane packets 304 that contain the scheduling information 306 and the user plane packets 308 that do not contain the scheduling information. In a specific example, the smart network interface card 404 is configured with a loopback function 406 to inspect an open radio access network (O-RAN) header to distinguish control plane packets 304 from user plane packets 308. Accordingly, the loopback function 406 retains (e.g., loops back) only the control plane packets 304 from the downlink traffic 302. This is contrast to loopback function 310 discussed above with respect to FIG. 3 which retains all of the downlink traffic 302. As such, the loopback function 406 can forgo the additional processing to extract the control plane packets 304 from the downlink traffic 302.

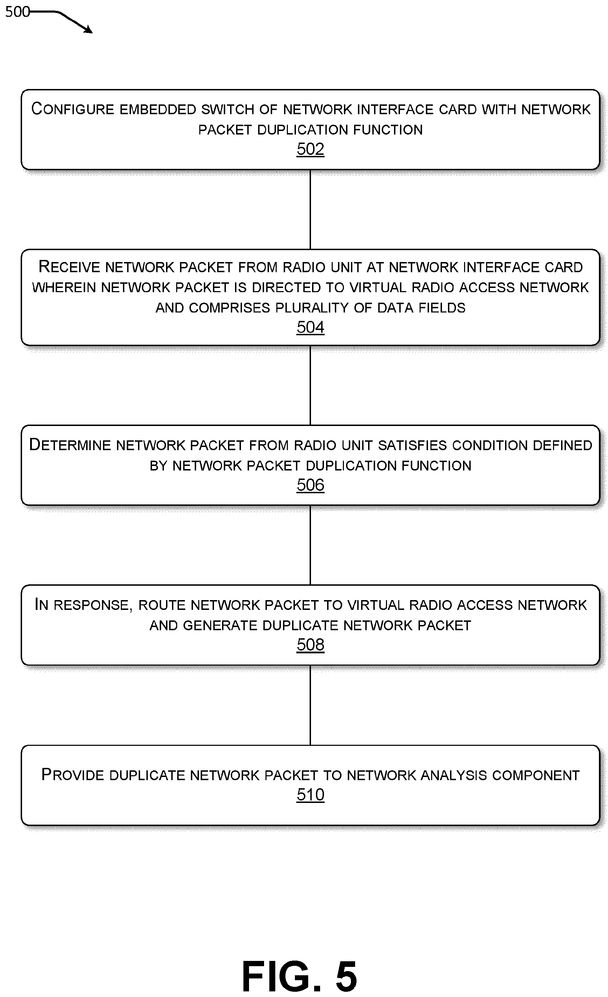

Turning now to FIG. 5, aspects of a process 500 for mirroring network traffic by duplicating network packets for analyzing a communications network are shown and described. With respect to FIG. 5, the process 500 begins at operation 502 where an embedded switch of a network interface card is configured with a network packet duplication function. As mentioned above, the network packet duplication function can be implemented as a virtual function in which network packets originating from a certain radio unit (e.g., identified by a medium access control address) are mirrored to a network analysis component (e.g., a capture application). Conversely, the network packet duplication function can be implemented as a mirroring rule that is programmed by way of a standard application programming interface. In an embodiment, the embedded switch is configured with the packet duplication function in lieu of a top-of-rack switch at the distributed unit server.

Next, at operation 504, the network interface card receives a network packet from a radio unit wherein the network packet received from the radio unit is directed to a physical layer of a virtual radio access network and the network packet received from the radio unit comprises a plurality of data fields. In a specific example, the network packet received from the radio unit is an in-phase and quadrature sample packet measuring an energy level in the subcarriers of a radio frequency spectrum.

Then, at operation 506, the network interface card determines that the network packet received from the radio unit satisfies a condition defined by the network packet duplication function. For instance, the network packet received from the radio unit can originate from a radio unit having a medium access control address that matches a target medium access control address defined by the condition.

Subsequently, at operation 508, the network interface card, via the embedded switch, routes network packet to the virtual radio access network and generates a duplicate network packet in response to determining that the network packet received from the radio unit satisfies the condition defined by the network packet duplication function. Finally, at operation 510, the network interface card provides the duplicate network packet to a network analysis component. In various examples, the network analysis component is a packet capture application serving as a repository for duplicate network packets. Accordingly, various packet analysis tools can be executed on the duplicate network packets stored at the network analysis component.

For ease of understanding, the process discussed in this disclosure is delineated as separate operations represented as independent blocks. However, these separately delineated operations should not be construed as necessarily order dependent in their performance. The order in which the process is described is not intended to be construed as a limitation, and any number of the described process blocks may be combined in any order to implement the process or an alternate process. Moreover, it is also possible that one or more of the provided operations is modified or omitted.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated method can end at any time and need not be performed in its entirety. Some or all operations of the method, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the process 500 can be implemented, at least in part, by modules running the features disclosed herein can be a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the process 500 may also be implemented in other ways. In addition, one or more of the operations of the process 500 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

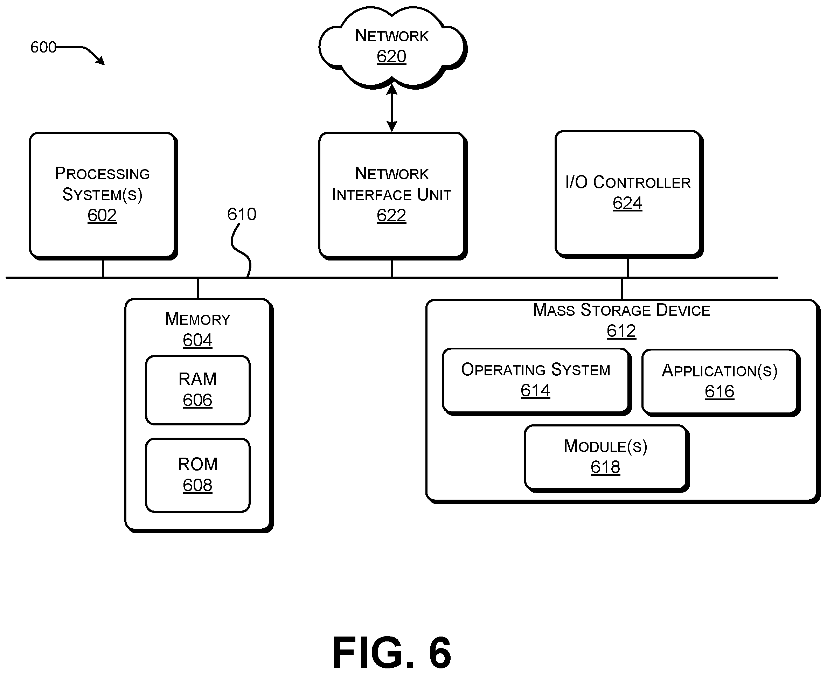

FIG. 6 shows additional details of an example computer architecture 600 for a device, capable of executing computer instructions (e.g., a module or a program component described herein). The computer architecture 600 illustrated in FIG. 6 includes processing system 602, a system memory 604, including a random-access memory 606 (RAM) and a read-only memory (ROM) 608, and a system bus 610 that couples the memory 604 to the processing system 602. The processing system 602 comprises processing unit(s). In various examples, the processing unit(s) of the processing system 602 are distributed. Stated another way, one processing unit of the processing system 602 may be located in a first location (e.g., a rack within a datacenter) while another processing unit of the processing system 602 is located in a second location separate from the first location. Moreover, the systems discussed herein can be provided as a distributed computing system such as a cloud service.

Processing unit(s), such as processing unit(s) of processing system 602, can represent, for example, a CPU-type processing unit, a GPU-type processing unit, a field-programmable gate array (FPGA), another class of digital signal processor (DSP), or other hardware logic components that may, in some instances, be driven by a CPU. For example, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), and the like.

A basic input/output system containing the basic routines that help to transfer information between elements within the computer architecture 600, such as during startup, is stored in the ROM 608. The computer architecture 600 further includes a mass storage device 612 for storing an operating system 614, application(s) 616, modules 618, and other data described herein.

The mass storage device 612 is connected to processing system 602 through a mass storage controller connected to the bus 610. The mass storage device 612 and its associated computer-readable media provide non-volatile storage for the computer architecture 600. Although the description of computer-readable media contained herein refers to a mass storage device, the computer-readable media can be any available computer-readable storage media or communication media that can be accessed by the computer architecture 600.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 600 may operate in a networked environment using logical connections to remote computers through the network 620. The computer architecture 600 may connect to the network 620 through a network interface unit 622 connected to the bus 610. The computer architecture 600 also may include an input/output controller 624 for receiving and processing input from a number of other devices, including a keyboard, mouse, touch, or electronic stylus or pen. Similarly, the input/output controller 624 may provide output to a display screen, a printer, or other type of output device.

The software components described herein may, when loaded into the processing system 602 and executed, transform the processing system 602 and the overall computer architecture 600 from a general-purpose computing system into a special-purpose computing system customized to facilitate the functionality presented herein. The processing system 602 may be constructed from any number of transistors or other discrete circuit elements, which may individually or collectively assume any number of states. More specifically, the processing system 602 may operate as a finite-state machine, in response to executable instructions contained within the software modules disclosed herein. These computer-executable instructions may transform the processing system 602 by specifying how the processing system 602 transition between states, thereby transforming the transistors or other discrete hardware elements constituting the processing system 602.

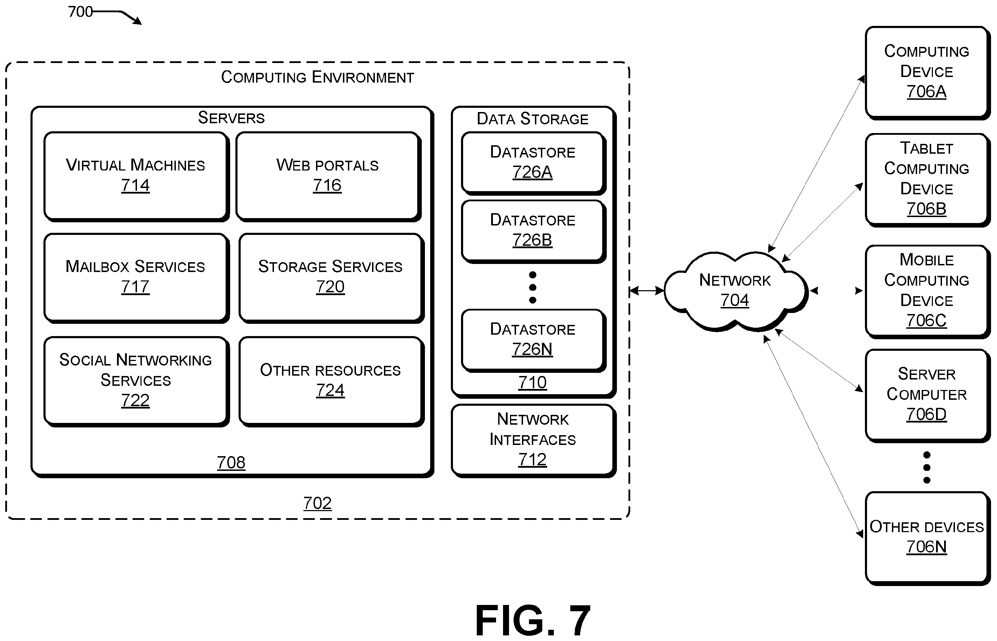

FIG. 7 depicts an illustrative distributed computing environment 700 capable of executing the software components described herein. Thus, the distributed computing environment 700 illustrated in FIG. 7 can be utilized to execute any aspects of the software components presented herein. For example, the distributed computing environment 700 can be utilized to execute aspects of the software components described herein.

Accordingly, the distributed computing environment 700 can include a computing environment 702 operating on, in communication with, or as part of the network 704. The network 704 can include various access networks. One or more client devices 706A-706N (hereinafter referred to collectively and/or generically as "computing devices 706") can communicate with the computing environment 702 via the network 704. In one illustrated configuration, the computing devices 706 include a computing device 706A such as a laptop computer, a desktop computer, or other computing device; a slate or tablet computing device ("tablet computing device") 706B; a mobile computing device 706C such as a mobile telephone, a smart phone, or other mobile computing device; a server computer 706D; and/or other devices 706N. It should be understood that any number of computing devices 706 can communicate with the computing environment 702.

In various examples, the computing environment 702 includes servers 708, data storage 710, and one or more network interfaces 712. The servers 708 can host various services, virtual machines, portals, and/or other resources. In the illustrated configuration, the servers 708 host virtual machines 714, Web portals 716, mailbox services 717, storage services 720, and/or social networking services 722. As shown in FIG. 7 the servers 708 also can host other services, applications, portals, and/or other resources ("other resources") 724.

As mentioned above, the computing environment 702 can include the data storage 710. According to various implementations, the functionality of the data storage 710 is provided by one or more databases operating on, or in communication with, the network 704. The functionality of the data storage 710 also can be provided by one or more servers configured to host data for the computing environment 700. The data storage 710 can include, host, or provide one or more real or virtual datastores 726A-726N (hereinafter referred to collectively and/or generically as "datastores 726"). The datastores 726 are configured to host data used or created by the servers 708 and/or other data. That is, the datastores 726 also can host or store web page documents, word documents, presentation documents, data structures, algorithms for execution by a recommendation engine, and/or other data utilized by any application program. Aspects of the datastores 726 may be associated with a service for storing files.

The computing environment 702 can communicate with, or be accessed by, the network interfaces 712. The network interfaces 712 can include various types of network hardware and software for supporting communications between two or more computing devices including the computing devices and the servers. It should be appreciated that the network interfaces 712 also may be utilized to connect to other types of networks and/or computer systems.

It should be understood that the distributed computing environment 700 described herein can provide any aspects of the software elements described herein with any number of virtual computing resources and/or other distributed computing functionality that can be configured to execute any aspects of the software components disclosed herein. According to various implementations of the concepts and technologies disclosed herein, the distributed computing environment 700 provides the software functionality described herein as a service to the computing devices. It should be understood that the computing devices can include real or virtual machines including server computers, web servers, personal computers, mobile computing devices, smart phones, and/or other devices. As such, various configurations of the concepts and technologies disclosed herein enable any device configured to access the distributed computing environment 700 to utilize the functionality described herein for providing the techniques disclosed herein, among other aspects.

The disclosure presented herein also encompasses the subject matter set forth in the following clauses.

Example Clause A, a method for duplicating network packets for analyzing a communications network using a network interface card of a distributed unit server operating at a cell site of the communications network, the method comprising: configuring an embedded switch of a network interface card with a network packet duplication function; receiving, at the embedded switch of the network interface card, a network packet from a radio unit, wherein: the network packet received from the radio unit is directed to a physical layer of a virtual radio access network; and the network packet received from the radio unit comprises a plurality of data fields; determining that the network packet received from the radio unit satisfies a condition defined by the network packet duplication function; in response to determining that the network packet received from the radio unit satisfies the condition defined by the network packet duplication function: routing, by the embedded switch, the network packet from the radio unit to the physical layer of the virtual radio access network; and generating, by the embedded switch, a duplicate network packet of the network packet received from the radio unit; and sending the duplicate network packet to a network analysis component.

Example Clause B, the method of Example Clause A, further comprising analyzing the plurality of data fields of the duplicate network packet using the network analysis component.

Example Clause C, the method of Example Clause A or Example Clause B, further comprising: receiving at the network analysis component, scheduling information from the physical layer of the virtual radio access network, wherein: the scheduling information is directed to the radio unit; and the scheduling information defines one or more active data fields of the plurality of data fields of the duplicate network packet; and selectively analyzing the one or more active data fields using the network analysis component.

Example Clause D, the method of Example Clause C, wherein the scheduling information is received by the network analysis component from the physical layer of the virtual radio access network by way of a packet loopback function implemented at the embedded switch of the network interface card.

Example Clause E, the method of Example Clause C, wherein: the network interface card is a smart network interface card; the smart network interface card is configured to distinguish between control plane packets containing the scheduling information and user plane packets that do not contain the scheduling information; and the smart network interface card provides the scheduling information to the network analysis component by way of a looping back the control plane packets.

Example Clause F, the method of any one of Example Clause A through E, wherein: the network packet received from the radio unit is a sample packet of a radio signal; the plurality of data fields represent a corresponding plurality of subcarriers associated with the radio signal; and an individual one of the plurality of data fields represents an energy level within an associated portion of a radio frequency spectrum of the radio signal.

Example Clause G, the method of any one of Example Clause A through F, wherein: the network packet from the radio unit is a first network packet received from a first radio unit; the duplicate network packet is a first duplicate network packet; the condition defined by the network packet duplication function defines the first radio unit as a target radio unit; and the method further comprising: receiving a second network packet from a second radio unit; determining that the second network packet received from the second radio unit is not the target radio unit in accordance with the condition defined by the network packet duplication function; and in response to determining that the second network packet second radio unit is not the target radio unit, routing the second network packet to the physical layer of the virtual radio access network without generating a second duplicate network packet of the second network packet.

Example Clause H, the method of any one of Example Clause A through G, wherein: routing the network packet from the radio unit to the physical layer of the virtual radio access network comprises executing a first virtual function that is assigned a medium access control address of the radio unit; and the network packet duplication function comprises a second virtual function that is assigned the medium access control address of the radio unit.

Example Clause I, the method of any one of Example Clause A through H, wherein the network packet duplication function is a mirroring rule that is configured by way of a standardized application programming interface.

Example Clause J, a system for duplicating network packets for analyzing a communications network, the system comprising an embedded switch of a network interface card configured with a network packet duplication function; the embedded switch configured to perform operations comprising: receiving a network packet from a radio unit, wherein: the network packet received from the radio unit is directed to a physical layer of a virtual radio access network; and the network packet received from the radio unit comprises a plurality of data fields; determining that the network packet received from the radio unit satisfies a condition defined by the network packet duplication function; in response to determining that the network packet received from the radio unit satisfies the condition defined by the network packet duplication function: routing the network packet from the radio unit to the physical layer of the virtual radio access network; and generating a duplicate network packet of the network packet received from the radio unit; and providing the duplicate network packet to a network analysis component.

Example Clause K, the system of Example Clause J, wherein the embedded switch is further configured to perform operations comprising analyzing the plurality of data fields of the duplicate network packet using the network analysis component.

Example Clause L, the system of Example Clause J or Example Clause K, wherein the embedded switch is further configured to perform operations comprising: receiving at the network analysis component, scheduling information from the physical layer of the virtual radio access network, wherein: the scheduling information is directed to the radio unit; and the scheduling information defining one or more active data fields of the plurality of data fields of the duplicate network packet; and selectively analyzing the one or more active data fields using the network analysis component.

Example Clause M, the system of Example Clause L, wherein the scheduling information is received by the network analysis component from the physical layer of the virtual radio access network by way of a packet loopback function implemented at the embedded switch of the network interface card.

Example Clause N, the system of Example Clause L, wherein: the network interface card is a smart network interface card; the smart network interface card is configured to distinguish between control plane packets containing the scheduling information and user plane packets that do not contain the scheduling information; and the smart network interface card provides the scheduling information to the network analysis component by way of a looping back the control plane packets.

Example Clause O, the system of any one of Example Clause J through N, wherein: the network packet received from the radio unit is a sample packet of a radio signal; the plurality of data fields represent a corresponding plurality of subcarriers associated with the radio signal; and an individual one of the plurality of data fields represents an energy level within an associated portion of a radio frequency spectrum of the radio signal.

Example Clause P, the system of any one of Example Clause J through O, wherein: the network packet from the radio unit is a first network packet received from a first radio unit; the duplicate network packet is a first duplicate network packet; the condition defined by the network packet duplication function defines the first radio unit as a target radio unit; and the embedded switch is further configured to perform operations comprising: receiving a second network packet from a second radio unit; determining that the second network packet received from the second radio unit is not the target radio unit in accordance with the condition defined by the network packet duplication function; and in response to determining that the second network packet second radio unit is not the target radio unit, routing the second network packet to the physical layer of the virtual radio access network without generating a second duplicate network packet of the second network packet.

Example Clause Q, the system of any one of Example Clause J through P, wherein: routing the network packet from the radio unit to the physical layer of the virtual radio access network comprises executing a first virtual function that is assigned a medium access control address of the radio unit; and the network packet duplication function comprises a second virtual function that is assigned the medium access control address of the radio unit.

Example Clause R, the system of any one of Example Clause J through Q, wherein the network packet duplication function is a routing rule that is configured by way of a standardized application programming interface.

Example Clause S, a computer-readable storage medium for duplicating network packets for analyzing a communications network, the computer-readable storage medium having encoded thereon computer-readable instructions that when executed by a system cause the system to perform operations comprising: configuring an embedded switch of a network interface card with a network packet duplication function; receiving, at a network interface card, a network packet from a radio unit, wherein: network interface card comprises an embedded switch configured with a network packet duplication function; the network packet received from the radio unit is directed to a physical layer of a virtual radio access network; and the network packet received from the radio unit comprises a plurality of data fields; determining that the network packet received from the radio unit satisfies a condition defined by the network packet duplication function; in response to determining that the network packet received from the radio unit satisfies the condition defined by the network packet duplication function: routing the network packet from the radio unit to the physical layer of the virtual radio access network; and generating a duplicate network packet of the network packet received from the radio unit; and providing the duplicate network packet to a network analysis component.

Example Clause T, the computer-readable storage medium of Example Clause S, the operations further comprising: receiving at the network analysis component, scheduling information from the physical layer of the virtual radio access network, wherein: the scheduling information is directed to the radio unit; and the scheduling information defining one or more active data fields of the plurality of data fields of the duplicate network packet; and selectively analyzing the one or more active data fields using the network analysis component.

The techniques disclosed herein provide a system for mirroring network traffic by way of network packet duplication using a network interface card in a communications environment. More specifically the present techniques are directed to retrieving data that is transmitted over a communications network (e.g., network packets) in a cloud radio access network (C-RAN) environment, also referred to as packet capture. For instance, the proposed system can mirror network traffic between a radio unit (RU) and a virtual radio access network (vRAN) within a distributed unit (DU) server of a telecommunications network (e.g., a 5G network). As such, the disclosed techniques exploit preexisting hardware and software features present in many network interface cards. In this way, the present techniques enable granular packet capture without requiring additional specialized hardware and/or software. Moreover, the network interface card can be configured to loopback scheduling information to streamline packet analysis operations.

Conditional language such as, among others, "can," "could," "might" or "may," unless specifically stated otherwise, are understood within the context to present that certain examples include, while other examples do not include, certain features, elements and/or steps. Thus, such conditional language is not generally intended to imply that certain features, elements and/or steps are in any way required for one or more examples or that one or more examples necessarily include logic for deciding, with or without user input or prompting, whether certain features, elements and/or steps are included or are to be performed in any particular example. Conjunctive language such as the phrase "at least one of X, Y or Z," unless specifically stated otherwise, is to be understood to present that an item, term, etc. may be either X, Y, or Z, or a combination thereof.

The terms "a," "an," "the" and similar referents used in the context of describing the invention (especially in the context of the following claims) are to be construed to cover both the singular and the plural unless otherwise indicated herein or clearly contradicted by context. The terms "based on," "based upon," and similar referents are to be construed as meaning "based at least in part" which includes being "based in part" and "based in whole" unless otherwise indicated or clearly contradicted by context.

In addition, any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for duplicating network packets (104) for analyzing a communications network using a network interface card of a distributed unit server operating at a cell site of the communications network, the method comprising:
configuring an embedded switch (114) of a network interface card (112) with a network packet duplication function (116);
receiving, at the embedded switch (114) of the network interface card (112), a network packet (104) from a radio unit (108), wherein:
the network packet (104) received from the radio unit (108) is directed to a physical layer of a virtual radio access network (110); and
the network packet (104) received from the radio unit (108) comprises a plurality of data fields (106);
determining that the network packet (104) received from the radio unit (108) satisfies a condition (118) defined by the network packet duplication function (116);
in response to determining that the network packet (104) received from the radio unit (108) satisfies the condition (118) defined by the network packet duplication function (116):
routing, by the embedded switch (114), the network packet (104) from the radio unit (108) to the physical layer of the virtual radio access network (110); and
generating, by the embedded switch (114), a duplicate network packet (120) of the network packet (104) received from the radio unit (108); and
sending the duplicate network packet (120) to a network analysis component (122).

2. The method of claim 1, further comprising analyzing the plurality of data fields of the duplicate network packet using the network analysis component.

3. The method of claim 1 or claim 2, further comprising:
receiving at the network analysis component, scheduling information from the physical layer of the virtual radio access network, wherein:
the scheduling information is directed to the radio unit; and
the scheduling information defines one or more active data fields of the plurality of data fields of the duplicate network packet; and
selectively analyzing the one or more active data fields using the network analysis component.

4. The method of claim 3, wherein the scheduling information is received by the network analysis component from the physical layer of the virtual radio access network by way of a packet loopback function implemented at the embedded switch of the network interface card.

5. The method of claim 3, wherein:
the network interface card is a smart network interface card;
the smart network interface card is configured to distinguish between control plane packets containing the scheduling information and user plane packets that do not contain the scheduling information; and
the smart network interface card provides the scheduling information to the network analysis component by way of a looping back the control plane packets.

6. The method of any one of claim 1 through claim 5, wherein:
the network packet received from the radio unit is a sample packet of a radio signal;
the plurality of data fields represent a corresponding plurality of subcarriers associated with the radio signal; and
an individual one of the plurality of data fields represents an energy level within an associated portion of a radio frequency spectrum of the radio signal.

7. The method of any one of claim 1 through claim 6, wherein:
the network packet from the radio unit is a first network packet received from a first radio unit;
the duplicate network packet is a first duplicate network packet;
the condition defined by the network packet duplication function defines the first radio unit as a target radio unit; and
the method further comprising:
receiving a second network packet from a second radio unit;
determining that the second network packet received from the second radio unit is not the target radio unit in accordance with the condition defined by the network packet duplication function; and
in response to determining that the second network packet second radio unit is not the target radio unit, routing the second network packet to the physical layer of the virtual radio access network without generating a second duplicate network packet of the second network packet.

8. The method of any one of claim 1 through 7, wherein:
routing the network packet from the radio unit to the physical layer of the virtual radio access network comprises executing a first virtual function that is assigned a medium access control address of the radio unit; and
the network packet duplication function comprises a second virtual function that is assigned the medium access control address of the radio unit.

9. The method of any one of claim 1 through 8, wherein the network packet duplication function is a mirroring rule that is configured by way of a standardized application programming interface.

10. A system for duplicating network packets for analyzing a communications network, the system comprising an embedded switch (114) of a network interface card (112) configured with a network packet duplication function (116); the embedded switch (114) configured to perform operations comprising:
receiving a network packet (104) from a radio unit (108), wherein:
the network packet (104) received from the radio unit (108) is directed to a physical layer of a virtual radio access network (110); and
the network packet (104) received from the radio unit (108) comprises a plurality of data fields (106);
determining that the network packet (104) received from the radio unit (108) satisfies a condition (118) defined by the network packet duplication function (116);
in response to determining that the network packet (104) received from the radio unit (108) satisfies the condition (118) defined by the network packet duplication function (116):
routing the network packet (104) from the radio unit (108) to the physical layer of the virtual radio access network (110); and
generating a duplicate network packet (120) of the network packet (104) received from the radio unit (108); and
providing the duplicate network packet (120) to a network analysis component (122).

11. The system of claim 10, wherein the embedded switch is further configured to perform operations comprising analyzing the plurality of data fields of the duplicate network packet using the network analysis component.

12. The system of claim 10 or claim 11, wherein the embedded switch is further configured to perform operations comprising:
receiving at the network analysis component, scheduling information from the physical layer of the virtual radio access network, wherein:
the scheduling information is directed to the radio unit; and
the scheduling information defining one or more active data fields of the plurality of data fields of the duplicate network packet; and
selectively analyzing the one or more active data fields using the network analysis component.

13. The system of claim 12, wherein the scheduling information is received by the network analysis component from the physical layer of the virtual radio access network by way of a packet loopback function implemented at the embedded switch of the network interface card.

14. The system of claim 12, wherein:
the network interface card is a smart network interface card;
the smart network interface card is configured to distinguish between control plane packets containing the scheduling information and user plane packets that do not contain the scheduling information; and
the smart network interface card provides the scheduling information to the network analysis component by way of a looping back the control plane packets.

15. A computer-readable storage medium for duplicating network packets for analyzing a communications network, the computer-readable storage medium having encoded thereon computer-readable instructions that when executed by a system cause the system to perform operations comprising:
configuring an embedded switch (114) of a network interface card (112) with a network packet duplication function (116);
receiving, at a network interface card (112), a network packet (104) from a radio unit (108), wherein:
network interface card (112) comprises an embedded switch (114) configured with a network packet duplication function (116);
the network packet (104) received from the radio unit (108) is directed to a physical layer of a virtual radio access network (110); and
the network packet (104) received from the radio unit (108) comprises a plurality of data fields (106);
determining that the network packet (104) received from the radio unit (108) satisfies a condition (118) defined by the network packet duplication function (116);
in response to determining that the network packet (104) received from the radio unit (108) satisfies the condition (118) defined by the network packet duplication function (116):
routing the network packet (104) from the radio unit (108) to the physical layer of the virtual radio access network (110); and
generating a duplicate network packet (120) of the network packet (104) received from the radio unit (108); and
providing the duplicate network packet (120) to a network analysis component (122).
